(19) Europäisches Patentamt
European Patent Office
Office européen des brevets

(11) Veröffentlichungsnummer : **0 197 471**
**B1**

(12) # EUROPÄISCHE PATENTSCHRIFT

(45) Veröffentlichungstag der Patentschrift : **05.04.89**

(51) Int. Cl.[4] : **C 09 B 29/033**, D 06 P 3/54

(21) Anmeldenummer : **86104338.8**

(22) Anmeldetag : **29.03.86**

(54) **Azofarbstoffe mit Thiophen-Diazokomponenten.**

(30) Priorität : **10.04.85 DE 3512760**

(43) Veröffentlichungstag der Anmeldung : **15.10.86 Patentblatt 86/42**

(45) Bekanntmachung des Hinweises auf die Patenterteilung : **05.04.89 Patentblatt 89/14**

(84) Benannte Vertragsstaaten : **BE CH DE FR GB IT LI NL**

(56) Entgegenhaltungen :
**EP–A– 0 036 081**
**FR–A– 2 388 860**
**RESEARCH DISCLOSURE, Band 198, Oktober 1980, Seiten 425-427, Artikel Nr. 19826; "Discharge/resist printing of synthetic textile materials using thiophene-azo disperse dyestuffs in the presence of alkali"**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Bergmann, Udo, Dr.**
**Merckstrasse 26**
**D-6100 Darmstadt (DE)**
Erfinder : **Hahn, Erwin, Dr.**
**Am Buechsenackerhang 31**
**D-6900 Heidelberg (DE)**
Erfinder : **Hansen, Guenter, Dr.**
**Alwin-Mittasch-Platz 8**
**D-6700 Ludwigshafen (DE)**
Erfinder : **Reichelt, Helmut, Dr.**
**Weinbachstrasse 20**
**D-6701 Niederkirchen (DE)**

**EP 0 197 471 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Aus der FR-A-2 388 860 und der EP-A-636 081 sind Azofarbstoffe bekannt, die Diazokomponenten aufweisen, die sich von 2-Aminothiophenen ableiten. Als Kupplungskomponenten dienen dabei Anilinderivate. Es hat sich jedoch gezeigt, daß der aus der FR-A-2 388 860 bekannt Farbstoff, der durch Kupplung von diazotiertem 2-Amino-3-cyano-4-methyl-5-formylthiophen mit N,N-Diethylamino-m-acetanilid resultiert, Mängel in seinen anwendungstechnischen Eigenschaften aufweist.

Research Disclosure, Band 198, 19826, (1980) beschreibt Azofarbstoffe mit Thienylresten als Diazorest und Anilinresten als Rest der Kupplungskomponente in allgemeiner Form. Einzelne Individuen sind dabei jedoch nicht aufgeführt.

Die Erfindung betrifft Verbindungen der allgemeinen Formel I

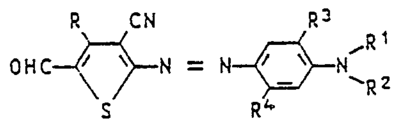

(I)

in der

R gegebenenfalls durch Fluor, Chlor, Brom, Trifluormethyl, $C_1$- bis $C_4$-Alkyl oder -Alkoxy, Nitro oder Cyan substituiertes Phenyl oder Naphthyl,

$R^1$ und $R^2$ $C_1$- bis $C_6$-Alkyl, das noch durch Hydroxy, $C_1$- bis $C_4$-Alkoxy, Phenoxy, Phenyl, Cyan, Alkanoyl, Alkanoyloxy, Alkoxycarbonyl, Aroyloxy, Alkoxyalkoxycarbonyl, 2-Phenoxyethoxycarbonyl, Alkoxycarbonyloxy, Alkylaminocarbonyloxy, Arylaminocarbonyloxy oder Alkoxyalkoxy substituiert sein kann, $C_2$- bis $C_4$-Alkenyl oder $C_5$- bis $C_7$-Cycloalkyl oder einer der Reste auch Wasserstoff,

$R^3$ Wasserstoff, Methyl, Methoxy, Ethoxy oder Chlor und

$R^4$ Acylamino sind.

Als Substituenten für den Rest R sind Chlor, Methyl oder Methoxy bevorzugt.

Einzelne Rest $R^1$ und $R^2$ sind beispielsweise Methyl, Ethyl, Propyl, Butyl, Pentyl, Hexyl, Allyl, Methallyl, 2-Cyanethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxycarbonyloxyethyl, 2-Ethoxycarbonyloxyethyl, 2-Propoxycarbonyloxyethyl, 2-Butoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Methoxyethoxycarbonylethyl, 2-Ethoxyethoxycarbonylethyl, 2-Propoxyethoxycarbonylethyl, 2-Butoxyethoxycarbonylethyl oder 2-Phenoxyethoxycarbonylethyl.

Als Rest $R^4$ kommen z. B. folgende in Betracht :

Gegebenenfalls substituiertes $C_1$- bis $C_6$-Alkanoylamino, gegebenenfalls substituiertes Benzoylamino sowie $C_1$- bis $C_4$-Alkylsulfonylamino oder -Di-alkylaminosulfonylamino.

Einzelne Reste $R^4$ sind beispielsweise :

Methylcarbonylamino, Ethylcarbonylamino, n- und i-Propylcarbonylamino, n-, i- und s-Butylcarbonylamino, Benzylcarbonylamino, Benzoylamino, o-, m-, p-Methylbenzoylamino, o-, m-, p-Chlorbenzoylamino, o-, m-, p-Methoxybenzoylamino, o-, m-, p-Nitrobenzoylamino, Methylsulfonylamino, Ethylsulfonylamino, Propylsulfonylamino, Methoxymethylcarbonylamino, Ethoxy-Phenoxy-, Cyan, Chlor- oder Brommethylcarbonylamino.

Zur Herstellung der Verbindungen der Formel I kann man ein Diazoniumsalz von Verbindungen der Formel

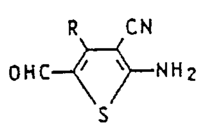

mit Kupplungskomponenten der Formel

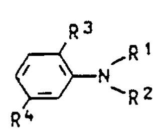

nach an sich bekannten Methoden umsetzen. Einzelheiten der Herstellung können den Beispielen entnommen werden, in denen sich Angaben über teile und Prozente, sofern nicht anders vermerkt, auf das Gewicht beziehen.

Die Verbindungen der Formel I eignen sich vorzugsweise zum Färben synthetischer Polyester, man erhält im wesentlichen blaue Farbtöne mit zum Teil sehr guten Echtheiten.

Von besonderer Bedeutung sind Verbindungen der Formel I, bei denen

R gegebenenfalls durch Chlor, Brom, Methyl, Ethyl, Methoxy oder Ethoxy substituiertes Phenyl,

$R^1$ und $R^2$ gegebenenfalls durch Hydroxy, Cyan, $C_1$- bis $C_4$-Alkanoyloxy, $C_1$- bis $C_4$-Alkyl, Allyl, Benzyl oder Phenylethyl, einer der Reste auch Wasserstoff,

$R^3$ Wasserstoff, Methyl, Methoxy oder Ethoxy und

$R^4$ $C_1$- bis $C_4$-Alkanoylamino, Methoxy-, Ethoxy-, Phenoxy-, Cyan- oder Chlormethylcarbonylamino, $C_1$- bis $C_4$-Alkylsulfonylamino oder Benzoylamino sind.

## Beispiel 1

22,8 Teile 2-Amino-3-cyan-4-phenyl-5-formylthiophen wurden in eine Mischung aus 150 Vol.-Teilen Eisessig/Propionsäure (3 : 1) und 50 Vol.-Teilen 85 %iger Schwefelsäure eingetragen. Bei 0-5 °C wurden 17,5 Vol.-Teile Nitrosylschwefelsäure (11,5 % $N_2O_3$) zugetropft. Anschließend ließ man 4 Stunden bei 0-5 °C rühren.

24,6 Teile 3-Diethylamino-acetanilid wurden in 100 Vol.-Teilen Dimethylformamid gelöst und die Lösung in 250 Teile Wasser, 50 Vol.-Teile 32 %ige Salzsäure, 1 000 Teile Eis und 2,5 Teile Amidosulfonsäure gegeben. Die zuvor erhaltene Diazolösung wurde im Laufe von 0,5 h unter Außenkühlung mit Eis/Wasser zugegeben, 4 h bei 0-5 °C und über Nacht ohne weitere Kühlung gerührt. Nach dem Absaugen, Neutralwaschen mit Wasser und Trocknen bei 60 °C im Vakuumtrockenschrank wurden 38 Teile eines blauschwarzen Pulvers der Formel

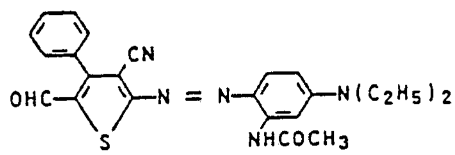

erhalten, das Polyester in echten, blauen Tönen färbt.

Analog wurden auch die in der folgenden Tabelle gekennzeichneten Farbstoffe erhalten.

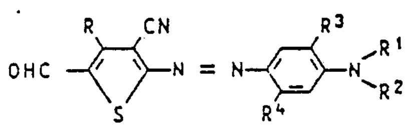

| Bsp. Nr. | R | $R^1$ | $R^2$ | $R^3$ | $R^4$ | Farbe auf PES |
|---|---|---|---|---|---|---|
| 2 | $C_6H_5$ | $CH_2CH{=}CH_2$ | $CH_2CH{=}CH_2$ | H | $NHCOCH_3$ | blau |
| 3 | $C_6H_5$ | $CH_2CH{=}CH_2$ | $CH_2CH{=}CH_2$ | H | $NHCOC_6H_5$ | blau |
| 4 | $C_6H_5$ | $C_2H_5$ | $C_2H_5$ | H | $NHCOC_6H_5$ | blau |
| 5 | $C_6H_5$ | $C_4H_9(n)$ | $C_4H_9(n)$ | H | $NHCOCH_3$ | blau |
| 6 | $C_6H_5$ | $C_6H_{13}(n)$ | $C_6H_{13}(n)$ | H | $NHCOCH_3$ | blau |
| 7 | $C_6H_5$ | $C_2H_4OCOCH_3$ | $C_2H_4OCOCH_3$ | H | $NHCOCH_3$ | blauviolett |
| 8 | $C_6H_5$ | $C_2H_4OCOCH_3$ | $C_2H_4OCOCH_3$ | H | $NHCOC_6H_5$ | blauviolett |
| 9 | $C_6H_5$ | $C_2H_4CN$ | $CH_2CH{=}CH_2$ | H | $NHCOC_6H_5$ | blauviolett |
| 10 | $C_6H_5$ | $C_2H_4CN$ | $C_4H_9(n)$ | H | $NHCOC_6H_5$ | blau |
| 11 | $C_6H_5$ | $C_2H_4CN$ | $C_2H_4O\overset{\overset{O}{\|}}{C}CH_3$ | H | $NHCOC_6H_5$ | blauviolett |
| 12 | $C_6H_5$ | $C_2H_4OCH_3$ | $C_2H_4CN$ | H | $NHCOCH_3$ | blau |
| 13 | $C_6H_5$ | $CH_2CO_2CH_3$ | $CH_2CO_2CH_3$ | $CH_3$ | $NHSO_2CH_3$ | blauviolett |
| 14 | $C_6H_5$ | H | $C_2H_4CO_2C_2H_4OC_6H_5$ | H | $NHCOCH_3$ | blauviolett |

(Fortsetzung)

| Bsp. Nr. | R | R¹ | R² | R³ | R⁴ | Farbe auf PES |
|---|---|---|---|---|---|---|
| 15 | $C_6H_5$ | H | $C_2H_4OC_2H_5$ | Cl | $NHCOCH_3$ | blau |
| 16 | $C_6H_5$ | $C_2H_4CN$ | $CH_2CH{=}CH_2$ | $OCH_3$ | $NHCOCH_3$ | grünst.blau |
| 17 | $C_6H_5$ | $C_2H_4OCOCH_3$ | $C_2H_4CO_2CH_3$ | H | $NHCOCH_3$ | violett |
| 18 | $C_6H_5$ | $C_2H_4OH$ | $C_2H_4CO_2CH_3$ | H | $NHCOCH_3$ | blau |
| 19 | $C_6H_5$ | $C_2H_4OH$ | $CH_2C_6H_5$ | H | $NHCOCH_3$ | blau |
| 20 | $C_6H_5$ | $C_2H_4OCOCH_3$ | $CH_2C_6H_5$ | H | $NHCOCH_3$ | blau |
| 21 | $C_6H_5$ | $CH_2CH{=}CH_2$ | $CH_2CH{=}CH_2$ | $OCH_3$ | $NHCOCH_3$ | grünst.blau |
| 22 | $C_6H_5$ | $C_2H_4OCOCH_3$ | $C_2H_4OCOCH_3$ | $OCH_3$ | $NHCOCH_3$ | grünst.blau |
| 23 | $C_6H_5$ | H | $C_2H_4CO_2C_4H_9(n)$ | $OCH_3$ | $NHCOCH_3$ | grünst.blau |
| 24 | $C_6H_5$ | H | $C_2H_4CO_2C_2H_4OC_4H_9$ | H | $NHCOCH_3$ | rotst.blau |
| 25 | $p{-}CH_3O{-}C_6H_4$ | $C_2H_5$ | $C_2H_5$ | H | $NHCOCH_3$ | blau |
| 26 | $p{-}CH_3O{-}C_6H_4$ | $CH_2CH{=}CH_2$ | $CH_2CH{=}CH_2$ | H | $NHCOCH_3$ | blau |
| 27 | $p{-}CH_3O{-}C_6H_4$ | $C_4H_9(n)$ | $C_4H_9(n)$ | H | $NHCOCH_3$ | blau |
| 28 | $p{-}CH_3O{-}C_6H_4$ | $C_6H_{13}(n)$ | $C_6H_{13}(n)$ | H | $NHCOCH_3$ | blau |
| 29 | $p{-}CH_3O{-}C_6H_4$ | $CH_2CH{=}CHCl$ | $CH_2CH{=}CHCl$ | H | $NHCOCH_3$ | rotst.blau |
| 30 | $p{-}CH_3O{-}C_6H_4$ | $C_2H_4CN$ | $C_4H_9(n)$ | H | $NHCOC_6H_5$ | blau |
| 31 | $p{-}CH_3O{-}C_6H_4$ | $C_2H_4OCOCH_3$ | $C_2H_4OCOCH_3$ | H | $NHCOC_6H_5$ | rotst.blau |
| 32 | $p{-}CH_3O{-}C_6H_4$ | $C_2H_4CN$ | $CH_2CH{=}CH_2$ | $OCH_3$ | $NHCOCH_3$ | grünst.blau |
| 33 | $p{-}CH_3O{-}C_6H_4$ | $CH_2CH{=}CH_2$ | $CH_2CH{=}CH_2$ | $OCH_3$ | $NHCOCH_3$ | grünst.blau |
| 34 | $p{-}Cl{-}C_6H_4$ | $C_2H_5$ | $C_2H_5$ | H | $NHCOCH_3$ | blau |
| 35 | $p{-}Cl{-}C_6H_4$ | $CH_2CH{=}CHCl$ | $CH_2CH{=}CHCl$ | H | $NHCOCH_3$ | rotst.blau |
| 36 | $p{-}Cl{-}C_6H_4$ | $C_6H_{13}(n)$ | $C_6H_{13}(n)$ | H | $NHCOCH_3$ | blau |
| 37 | $p{-}Cl{-}C_6H_4$ | $C_2H_4OCOCH_3$ | $C_2H_4OCOCH_3$ | H | $NHCOCH_3$ | blauviolett |
| 38 | $p{-}Cl{-}C_6H_4$ | $C_2H_4CN$ | $C_2H_4O\overset{\overset{O}{\Vert}}{C}CH_3$ | H | $NHCOC_6H_5$ | blauviolett |
| 39 | $p{-}Cl{-}C_6H_4$ | $C_2H_4CN$ | $CH_2CH{=}CH_2$ | $OCH_3$ | $NHCOCH_3$ | grünst.blau |
| 40 | $p{-}Cl{-}C_6H_4$ | $CH_2CH{=}CH_2$ | $CH_2CH{=}CH_2$ | $OCH_3$ | $NHCOCH_3$ | grünst.blau |
| 41 | $p{-}CH_3{-}C_6H_4$ | $C_2H_5$ | $C_2H_5$ | H | $NHCOCH_3$ | blau |
| 42 | $p{-}CH_3{-}C_6H_4$ | $CH_2CH{=}CH_2$ | $CH_2CH{=}CH_2$ | H | $NHCOCH_3$ | blau |
| 43 | $p{-}CH_3{-}C_6H_4$ | $C_4H_9(n)$ | $C_4H_9(n)$ | H | $NHCOCH_3$ | blau |
| 44 | $p{-}CH_3{-}C_6H_4$ | $C_6H_{13}(n)$ | $C_6H_{13}(n)$ | H | $NHCOCH_3$ | blau |
| 45 | $p{-}CH_3{-}C_6H_4$ | $CH_2CH{=}CH_2$ | $CH_2CH{=}CH_2$ | H | $NHCOC_2H_5$ | blau |
| 46 | $p{-}CH_3{-}C_6H_4$ | $C_2H_4CN$ | $CH_2CH{=}CH_2$ | $OCH_3$ | $NHCOCH_3$ | grünst.blau |
| 47 | $p{-}CH_3{-}C_6H_4$ | $C_2H_4OCOCH_3$ | $C_2H_4OCOCH_3$ | $OCH_3$ | $NHCOCH_3$ | grünst.blau |
| 48 | $o,p{-}(CH_3)_2{-}C_6H_3$ | $C_2H_5$ | $C_2H_5$ | H | $NHCOCH_3$ | blau |
| 49 | $o,p{-}(CH_3)_2{-}C_6H_3$ | $C_4H_9(n)$ | $C_4H_9(n)$ | H | $NHCOCH_3$ | blau |
| 50 | $o,p{-}(CH_3)_2{-}C_6H_3$ | $CH_2CH{=}CH_2$ | $CH_2CH{=}CH_2$ | H | $NHCOCH_3$ | blau |
| 51 | $o,p{-}(CH_3)_2{-}C_6H_3$ | $C_6H_{13}(n)$ | $C_6H_{13}(n)$ | H | $NHCOCH_3$ | blau |

(Fortsetzung)

| Bsp. Nr. | R | $R^1$ | $R^2$ | $R^3$ | $R^4$ | Farbe auf PES |
|---|---|---|---|---|---|---|
| 52 | $o,p-(CH_3)_2-C_6H_3$ | $C_2H_4OCOCH_3$ | $C_2H_4OCOCH_3$ | H | $NHCOC_6H_5$ | blau |
| 53 | $o,p-(CH_3)_2-C_6H_3$ | $C_2H_4CN$ | $CH_2CH{=}CH_2$ | $OCH_3$ | $NHCOCH_3$ | blau |
| 54 | 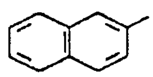 | $C_2H_5$ | $C_2H_5$ | H | $NHCOCH_3$ | blau |
| 55 | 〃 | $C_4H_9(n)$ | $C_4H_9(n)$ | H | $NHCOCH_3$ | blau |
| 56 | 〃 | $C_6H_{13}(n)$ | $C_6H_{13}(n)$ | H | $NHCOCH_3$ | blau |
| 57 | $C_6H_5$ | $C_2H_5$ | $C_2H_5$ | H | $NHCOCH_2OCH_3$ | blau |
| 58 | $C_6H_5$ | $C_3H_7(n)$ | $C_3H_7(n)$ | H | $NHCOCH_2OCH_3$ | blau |
| 59 | $C_6H_5$ | $C_4H_9(n)$ | $C_4H_9(n)$ | H | $NHCOCH_2OCH_3$ | blau |
| 60 | $C_6H_5$ | $C_2H_5$ | $C_2H_5$ | H | $NHCOCH_2OC_2H_5$ | blau |
| 61 | $C_6H_5$ | $C_2H_5$ | $C_2H_5$ | H | $NHCOCH_2Cl$ | blau |
| 62 | $C_6H_5$ | $C_2H_5$ | $C_2H_5$ | H | $NHCOCH_2CN$ | blau |
| 63 | $C_6H_5$ | $C_2H_5$ | $C_2H_5$ | H | $NHCOCH_2OC_6H_5$ | blau |

## Patentansprüche

1. Verbindungen der allgemeinen Formel I

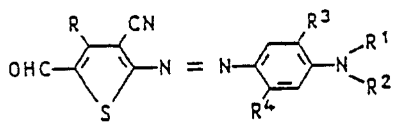

(I)

in der

R gegebenenfalls durch Fluor, Chlor, Brom, Trifluormethyl, $C_1$- bis $C_4$-Alkyl oder -Alkoxy, Nitro oder Cyan substituiertes Phenyl oder Naphthyl,

$R^1$ und $R^2$ $C_1$- bis $C_6$-Alkyl, das noch durch Hydroxy, $C_1$- bis $C_4$-Alkoxy, Phenoxy, Phenyl, Cyan, Alkanoyl, Alkanoyloxy, Alkoxycarbonyl, Alkoxyalkoxycarbonyl, 2-Phenoxyethoxycarbonyl, Aroyloxy, Alkoxycarbonyloxy, Alkylaminocarbonyloxy, Arylaminocarbonyloxy oder Alkoxyalkoxy substituiert sein kann, $C_2$- bis $C_4$-Alkenyl oder $C_5$- bis $C_7$-Cycloalkyl oder einer der Reste auch Wasserstoff,

$R^3$ Wasserstoff, Methyl, Methoxy, Ethoxy oder Chlor und

$R^4$ Acylamino sind.

2. Verbindungen gemäß Anspruch 1, bei denen

R gegebenenfalls durch Chlor, Brom, Methyl, Ethyl, Methoxy oder Ethoxy substituiertes Phenyl,

$R^1$ und $R^2$ gegebenenfalls durch Hydroxy, Cyan, $C_1$- bis $C_4$-Alkanoyloxy, $C_1$- bis $C_4$-Alkoxycarbonyl oder $C_1$- bis $C_4$-Alkoxy substituiertes $C_1$- bis $C_4$-Alkyl, Allyl, Benzyl oder Phenylethyl, einer der Reste auch Wasserstoff,

$R^3$ Wasserstoff, Methyl, Methoxy oder Ethoxy und

$R^4$ $C_1$- bis $C_4$-Alkanoylamino, Methoxy-, Ethoxy-, Phenoxy-, Cyan- oder Chlormethylcarbonylamino, $C_1$- bis $C_4$-Alkylsulfonylamino oder Benzoylamino sind.

3. Verwendung der Verbindungen gemäß Anspruch 1 zum Färben von Polyestern.

## Claims

1. A compound of the formula I

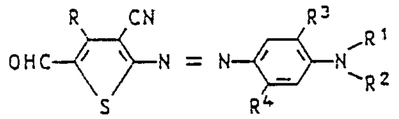

(I)

where

R is phenyl or naphthyl which are each unsubstituted 5 or substituted by fluorine, chlorine, bromine, trifluoromethyl, $C_1$-$C_4$-alkyl or -alkoxy, nitro or cyano,

$R_1$ and $R_2$ are each $C_1$-$C_6$-alkyl which may additionally be substituted by hydroxyl, $C_1$-$C_4$-alkoxy, phenoxy, phenyl, cyano, alkanoyl, alkanoyloxy, alkoxycarbonyl, alkoxyalkoxycarbonyl, 2-phenoxyethoxycarbonyl, aroyloxy, alkoxycarbonyloxy, alkylaminocarbonyloxy, arylaminocarbonyloxy or alkoxyalkoxy, or are each $C_2$-$C_4$ alkenyl or $C_5$-$C_7$-cycloalkyl, or more be hydrogen,

$R^3$ is hydrogen, methyl, methoxy, ethoxy or chlorine and

$R^4$ is acylamino.

2. A compound as claimed in claim 1, wherein

R is phenyl which is unsubstituted or substituted by chlorine, bromine, methyl, ethyl, methoxy or ethoxy,

$R^1$ and $R_2$ are each allyl, benzyl, phenylethyl or $C_1$-$C_4$-alkyl which is unsubstituted or substituted by hydroxyl, cyano, $C_1$-$C_4$-alkanoyloxy, $C_1$-$C_4$-alkoxycarbonyl or $C_1$-$C_4$-alkoxy, and one of the radicals may furthermore be hydrogen,

$R^3$ is hydrogen, methyl, methoxy or ethoxy and

$R^4$ is $C_1$-$C_4$-alkanoylamino, methoxy-, ethoxy-, phenoxy-, cyano- or chloromethylcarbonylamino, $C_1$-$C_4$-alkylsulfonylamino or benzoylamino.

3. Use of the compounds as claimed in Claim 1 for dyeing polyesters.

**Revendications**

1. Composés de formule générale I

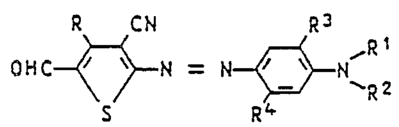

(I)

dans laquelle

R est un groupement phényle ou naphtyle éventuellement substitué par des atomes de fluor, de chlore ou de brome ou par des groupements trifluorométhyle, alkyle ou alcoxy en $C_1$-$C_4$, nitro ou cyano,

$R^1$ et $R^2$ sont des groupements alkyle en $C_1$-$C_6$ qui peuvent encore être substitués par des groupements hydroxy, alcoxy en $C_1$-$C_4$, phénoxy, phényle, cyano, alcanoyle, alcanoyloxy, alcoxycarbonyle, aroyloxy, alcoxyalcoxycarbonyle, 2-phénoxyéthoxycarbonyle, alcoxycarbonyloxy, alkylaminocarbonyloxy, arylaminocarbonyloxy ou alcoxyalcoxy, ou des groupements alcényle ou cycloalkyle en $C_5$-$C_7$ ou l'un des deux restes peut être aussi un atome d'hydrogène,

$R^3$ est un atome d'hydrogène, un groupement méthyle, méthoxy ou éthoxy ou un atome de chlore, et

$R^4$ est un groupement acylamino.

2. Composés selon la revendication 1, dans lesquels

R est un groupement phényl éventuellement substitué par des atomes de chlore ou de brome ou des groupements méthyle, éthyle, méthoxy ou éthoxy,

$R^1$ et $R^2$ sont des groupements alkyle en $C_1$-$C_4$ éventuellement substitués par des groupements hydroxy, cyano, alcanoyloxy en $C_1$-$C_4$, (alcoxy en $C_1$-$C_4$) carbonyle ou alcoxy en $C_1$-$C_4$, ou des groupements allyle, benzyle ou phényléthyle, l'un des restes pouvant être aussi un atome d'hydrogène,

$R^3$ est un atome d'hydrogène ou un groupement méthyle, méthoxy ou éthoxy, et

$R^4$ est un groupement alcanoylamino en $C_1$-$C_4$, méthoxy éthoxy-, phénoxy-, cyano- ou chlorométhylcarbonylamino, alkylsulfonylamino en $C_1$-$C_4$ ou benzoylamino.

3. Utilisation des composés selon la revendication 1, pour teindre des polyesters.